# EUROPEAN PATENT APPLICATION

(11) **EP 2 845 630 A1**
(43) Date of publication of application: **11.03.2015**
(21) Application number: 13844708.1
(22) Date of filing: 02.10.2013
(51) Int. Cl.: A63B 29/02, A63B 29/00

(54) **SPRING-TYPE CLAMP FOR ROCK CLIMBING**

(30) Priority: 11.10.2012 KR 20120113020
(71) Applicant: Hong, Seul Min, Yangsan-si, Gyeongsangnam-do 626-757 (KR); Jung, Sun Gi, Yangsan-si, Gyeongsangnam-do 626-757 (KR)
(72) Inventor: HONG, Sang-Kown, Gyeongsangnam-do 626-757 (KR)
(74) Representative: De Clercq, Ann G. Y.
(86) International application number: PCT/KR2013/008817
(87) International publication number: WO 2014/058174

(57) **Abstract**

A spring-type clamp is provided, which makes it possible to place a climbing protection piece at a distance when rock climbing. The spring-type clamp for rock climbing includes a pole having a ball head mounted at an upper end thereof, and a clamp coupled to one end of the ball head to apply a fastening force to a surface of the climbing protection piece so as to grasp the climbing protection piece.

## Description

### BACKGROUND OF THE INVENTION

### TECHNICAL FIELD

The present invention relates to a clamp used during rock climbing. More particularly, the present invention relates to a spring-type clamp for rock climbing, which makes it possible to install a climbing protection piece more safely using a length-adjustable pole so that the climbing protection piece can be installed in a preferable place at a distance when climbing a section where it is very dangerous to install the climbing protection piece during the rock climbing.

### BACKGROUND ART

In general, rock climbing is performed in a manner that a leader climbs a rock as hooking a rope on a vertical rock wall, and then a second climbs the rock as tying his/her body with the already installed rope.

At this time, in order to avoid danger and to perform climbing more safely, the leader may hook a carabiner on a bolt hanger that is installed on the rock wall to pass a rope through the carabiner, or hook a climbing protection piece between gaps to reduce a fall distance.

The climbing protection pieces (carabiner, cam set, nuts, hooks, etc.) are currently used in climbing, and such climbing protection pieces are put on belts that the leader and the second wear on their bodies.

However, such climbing protection pieces have a short length of 30 cm or less, and thus can be installed or withdrawn only in positions that the leader and the second can reach with their hands.

Accordingly, if a space for installing the climbing protection piece therein is not secured in the position that the leader or the second can reach with his/her hand, it is difficult to install the climbing protection piece having the short length in the position, and this may cause fall accident to occur.

### DISCLOSURE

### TECHNICAL PROBLEM

Therefore, the present invention has been made to solve the above-mentioned problems occurring in the related art, and one subject to be achieved by the present invention is to provide a spring-type clamp for rock climbing, which makes it possible to safely install a climbing protection piece at a distance through fastening of the climbing protection piece to a foldable pole.

Another subject to be achieved by the present invention is to provide a spring-type clamp for rock climbing, which makes it possible to install a climbing protection piece (carabiner, cam, etc.) more easily through grasping or releasing of the climbing protection piece using an elastic body.

### TECHNICAL SOLUTION

In accordance with an aspect of the present invention, there is provided a spring-type clamp for rock climbing, which includes a pole having a ball head mounted at an upper end thereof; and a clamp coupled to one end of the ball head to apply a fastening force to a surface of the climbing protection piece so as to grasp the climbing protection piece.

The length of the pole may be variable according to an installation position of the climbing protection piece.

The clamp may include a tongs portion having one end that applies the fastening force to the climbing protection piece and a coupling portion having the other end that is coupled to the ball head, wherein a placement portion is provided at a lower end of the tongs portion to hook a climbing rope thereon, and a hook portion having a bent shape, on which the climbing protection piece (carabiner, cam, etc.) that is fastened by the tongs portion is hooked, is coupled to the coupling portion.

A sponge (urethane foam, silicon foam, etc.) that can be transformed depending on a kind of the climbing protection piece may fill in on a fastening surface of the climbing protection piece of the tongs portion to heighten the fastening force of the climbing protection piece, and then rubber having a strong frictional force may be adhered to a surface of the sponge.

One end of the hook portion that is coupled to the coupling portion may be made of an elastic body to grasp or release the climbing protection piece (carabiner, cam, etc.).

### ADVANTAGEOUS EFFECT

According to the present invention having the above-described configuration, the climbing protection piece can be easily installed at a good belay position at a distance using the foldable pole, and thus the life and safety of a rock climber can be secured.

Further, the climbing protection piece that should be narrowed to be installed, such as a carabiner or a cam, can be installed more easily using the elastic body.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a perspective view of a spring-type clamp according to an embodiment of the present invention;
Fig. 2 is a perspective view illustrating an operation state of a spring-type clamp according to an embodiment of the present invention;
Fig. 3 is an exploded perspective view of a spring-type clamp according to an embodiment of the present invention; and
Figs. 4 to 8 are views illustrating use states of a spring-type clamp according to modified embodiments of the present invention.

* Description of Reference Numerals in the Drawing
10: pole 12: ball head
12a: male screw 14: ball head adjustment portion
20: clamp 22: tongs portion
22a: sponge 22b: rubber
24: coupling portion 24a: nut
26: displacement portion 28: hook portion
28a: elastic body

### PREFERRED EMBODIMENTS OF THE INVENTION

Now, preferred embodiments of the present invention will be described in detail with reference to the accompanying drawings. In this process, thicknesses of lines or sizes of constituent elements illustrated in the drawings may be exaggerated for clarity and convenience in explanation.

Further, all terms to be described later are defined in consideration of functions in the present invention, and may differ depending on users, operator's intentions or customs. Accordingly, definition of such terms should be made based on the contents over the whole description of the invention.

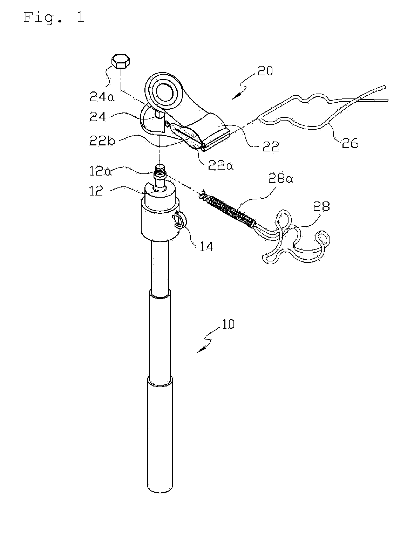

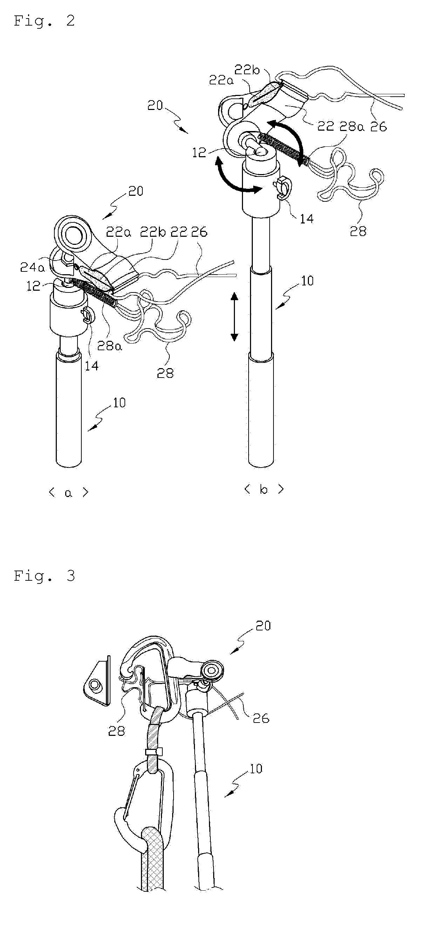

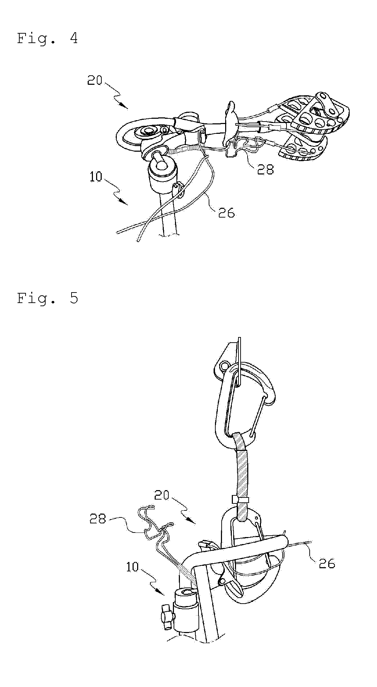

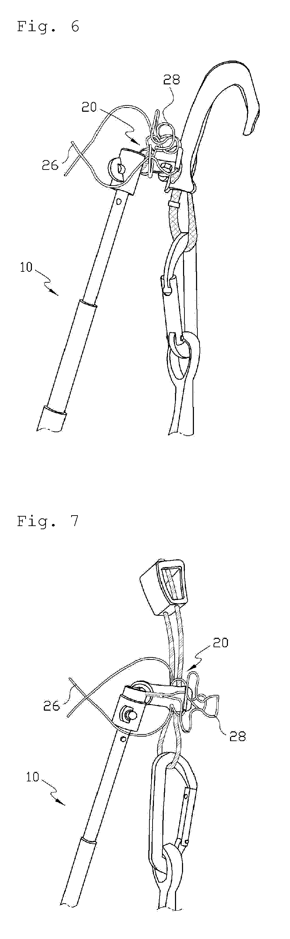

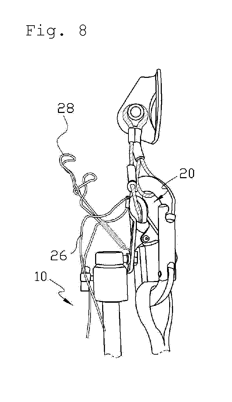

Fig. 1 is a perspective view of a spring-type clamp according to an embodiment of the present invention, and Fig. 2 is a perspective view illustrating an operation state of a spring-type clamp according to an embodiment of the present invention. Fig. 3 is an exploded perspective view of a spring-type clamp according to an embodiment of the present invention, and Figs. 4 to 8 are views illustrating use states of a spring-type clamp according to modified embodiments of the present invention.

Referring to Figs. 1 to 3, a spring-type clamp for rock climbing according to an embodiment of the present invention includes a pole 10 and a clamp 20.

The pole 10 is formed of a light material, such as plastic, so that a rock climber can easily carry the pole 10.

It is preferable that the length of the pole 10 is variable so that a rock climber can easily install the pole 10 according to the position and distance in which a climbing protection piece should be installed.

Further, the pole 10 may be replaced by a multi-purpose sport stick or a stick having a predetermined length.

In this case, at an upper end of the pole 10, a ball head 12 is mounted to be coupled to the clamp 20 to be described later. The ball head 12 is rotatable by 360° at the upper end of the pole 10, and can be rotated or fixed by an adjustment portion 14 that is provided at the upper end of the pole 10.

At one end of the ball head 12, a male screw portion 12a is formed to couple the clamp 20.

The clamp 20 is coupled to the male screw portion 12a formed at one end of the ball head 12 using a nut 24a.

A tongs portion 22 for fastening the climbing protection pieces is provided at one end of the clamp 20, and a coupling portion 24, which can be coupled to the male screw portion 12a of the ball head 12 using the nut 24a, is provided at the other end of the clamp 20.

A material, such as a sponge (urethane foam, silicon foam, etc.) 22a that can be transformed depending on the shape of the climbing protection piece to heighten a fastening force of the climbing protection piece when the climbing protection piece is fastened, is adhered to a climbing protection piece fastening surface of the hook portion 22.

In this case, in order to further strengthen the fastening force of the climbing protection piece, rubber 22b having a strong frictional force may be adhered to the surface of the sponge 22a to which the climbing protection piece is fastened.

In addition, a placement portion 26 is provided at a lower end of the tongs portion 22 to place and hook a climbing rope on the climbing protection piece, such as a carabiner.

It is preferable that the placement portion 26 is rotatably coupled to the lower end of the tongs portion 22 to adjust an angle at which the rope is placed.

A hook portion 28 is coupled to the coupling portion 24 to grasp or release the climbing protection pieces, such as a carabiner and a cam, that are fastened by the tongs portion 22.

One end of the hook portion 28 that is coupled to the coupling portion 24 is provided with an elastic body 28a to grasp or release the climbing protection pieces, such as a carabiner and a cam.

According to the spring-type clamp for rock climbing according to an embodiment of the present invention, the climbing protection piece can be easily installed at a good belay position at a distance using the foldable pole, and thus the life and safety of a rock climber can be secured.

Further, the climbing protection pieces that should be narrowed to be installed, such as a carabiner and a cam, can be installed more easily using the elastic body.

### INDUSTRIAL APPLICABILITY

The present invention can be applied to a spring-type clamp for rock climbing, which makes it possible to install a climbing protection piece more safely using a length-adjustable pole so that the climbing protection piece can be installed in a preferable place at a distance when climbing a section where it is very dangerous to install the climbing protection piece during the rock climbing.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A spring-type clamp for rock climbing, comprising:
a pole having a ball head mounted at an upper end thereof; and
a clamp coupled to one end of the ball head to apply a fastening force to a surface of the climbing protection piece so as to grasp the climbing protection piece.

2. The spring-type clamp for rock climbing of claim 2, wherein the length of the pole is variable according to an installation position of the climbing protection piece.

3. The spring-type clamp for rock climbing of claim 1, wherein the clamp comprises a tongs portion having one end that applies the fastening force to the climbing protection piece, and a coupling portion having the other end that is coupled to the ball head,
wherein a placement portion is provided at a lower end of the tongs portion to hook a climbing rope thereon, and a hook portion having a bent shape, on which the climbing protection piece (carabiner, cam, etc.) that is fastened by the tongs portion is hooked, is coupled to the coupling portion.

4. The spring-type clamp for rock climbing of claim 3, wherein a sponge (urethane foam, silicon foam, etc.) that can be transformed depending on a kind of the climbing protection piece fills in on a fastening surface of the climbing protection piece of the tongs portion to heighten the fastening force of the climbing protection piece, and then rubber having a strong frictional force is adhered to a surface of the sponge.

5. The spring-type clamp for rock climbing of claim 3, wherein one end of the hook portion that is coupled to the coupling portion is made of an elastic body to grasp or release the climbing protection piece (carabiner, cam, etc.).
